Europäisches Patentamt

(19) European Patent Office

Office européen des brevets

(11) Publication number: **0 141 638**
A2

(12) # EUROPEAN PATENT APPLICATION

(21) Application number: **84307451.9**

(22) Date of filing: **29.10.84**

(51) Int. Cl.⁴: **A 01 C 7/04**

(30) Priority: **31.10.83 US 546830**

(43) Date of publication of application: **15.05.85**
Bulletin 85/20

(84) Designated Contracting States: **DE FR GB**

(71) Applicant: **DEERE & COMPANY, 1 John Deere Road, Moline Illinois 61265 (US)**

(72) Inventor: **Webber, Jerry Don, 111 - 6th Avenue, Moline Illinois 61265 (US)**
Inventor: **Olson, Jay Harold, 1716 - 29th Street, Rock Island Illinois 61201 (US)**
Inventor: **Gallens, Richard France, 2639 - 38th Avenue, Moline Illinois 61265 (US)**

(74) Representative: **Pears, David Ashley et al, REDDIE & GROSE 16 Theobalds Road, London WC1X 8PL (GB)**

(54) **Flexible vacuum seal.**

(57) An endless sealing strip (48) has a base portion (52) which is held in a mounting channel inside the housing of a seed meter, and a lip (54) springing from the base portion. The lip bears against one face of a seed disk to define, with the disk and the housing, a vacuum chamber which applies suction through holes in the disk to pick up seeds from a seed chamber on the opposite side of the disk and carry them to a discharge sector where they drop off the disk and down a planting chute. The major part (84) of the seal lies on a circle outside the path of the holes. In the discharge sector the seal has a reentrant portion (92) which is set inside the path of the holes so that suction is not applied over the discharge sector, in order that the seeds may drop off the disk.

## FLEXIBLE VACUUM SEAL

The present invention relates to a flexible seal of resilient material, the seal being of generally uniform cross-section and having an endless base portion and an endless lip portion extending from the base portion specially for sealing off a vacuum chamber at the side of a rotatable seed disk within the housing of a vacuum seed meter.

It is known in the field of agricultural implements to provide a seed meter which meters or dispenses individual seeds from a seed mass during a planting operation. In seed meters of the air type as opposed to mechanical seed meters, blowing air or vacuum is used to hold individual seeds on a moving member such as a seed disk for eventual discharge. Examples of air seed meters using blowing air or pressure are provided by US Patents 3,888,387 of Deckler, 4,047,638 of Harrer and 4,074,830 of Adams. Examples of seed meters in which vacuum is used to hold individual seeds in place on the moving member are provided by US Patents 3,608,787 of Grataloup and 3,990,606 of Gugenhan. Such patents describe a variety of different arrangements using different configurations of a movable member for picking up, holding and then discharging the seeds. Such arrangements therefore provide a variety of different configurations and apparatus for communicating the blowing air or pressure or the vacuum, depending upon the type of air seed meter, to the moving member.

We have developed a different type of vacuum seed meter with a

0141638

rotatable seed disk within the hollow interior of a generally cylindrical housing which is mounted at the bottom of a seed hopper. Seeds from the hopper flow into a seed chamber within the housing on a side of the seed disk having a plurality of seed cells therein. As the seed disk rotates, the seed cells which are arranged in a circumferential array about the seed disk agitate, accelerate and then capture individual seeds therein. As the seed cells rise above the seed mass within the seed chamber, the individual seeds are held within the cells by vacuum from a source coupled to a vacuum chamber on the opposite side of the seed disk. The vacuum communicates with apertures at the bottoms of the seed cells which extend through the thickness of the seed disk. As the individual seeds are carried by the seed cells in the seed disk, they eventually reach a point where they must be released from the seed cells for discharge from the seed meter. This is accomplished by isolating the effects of the vacuum from the seed cells in such a region.

In a vacuum seed meter of this type, it is necessary that the vacuum chamber within the seed meter housing be sealed so that the vacuum can be confined to the apertures within the seed disk which communicate with the seed cells. This requires sealing of the region between the outer periphery of the seed disk and the interior wall of the seed meter housing defining the vacuum chamber. Complicating this requirement is the fact that the seed meter rotates at a speed which can become quite substantial. An even further requirement is imposed by the necessity for cutting off the vacuum from that portion of the seed meter which is within the seed discharge area. These various requirements suggest the use of a seal between the inner wall of the seed meter housing and the seed disk in the region of the vacuum chamber so as to confine the vacuum to the apertures within the seed disk. At the same time, such seal must be capable of accommodating rotation of the seed disk, and must furthermore be capable of isolating a portion of the seed disk from the vacuum source.

It is known to provide flexible seals for use between a stationary member and a rotatable or otherwise movable member. Such seals are typically annular or circular in configuration and employ one or more relatively thin, flexible portions of a resilient sealing member or arrangement for bearing against the rotating or otherwise movable part. Examples of this type of seal are provided by US Patents 4,260,165 of Hartelius, 3,664,675 of Malmstrom, 3,713,659 of Derman, 3,703,296 of Malmstrom, 3,980,309 of Dechavaune, 3,504,917 of Malmstrom, and 4,311,315 of Kronenberg. Examples of other seals used in different sealing arrangements are provided by US Patents 4,375,292 of Ericson and 4,204,948 of Wechsler et al. While the various sealing arrangements noted in these patents concern the problem of providing a seal between a moving part and a stationary part, and some address the situation in which a pressure differential is present or utilized in a sealing environment, none contemplate the particular problems discussed above in connection with a vacuum seed meter of the type described above, or suggest a solution thereto.

The object of the present invention is to provide an improved flexible seal for use between a stationary member and a rotatable member, especially for use with a vacuum seed meter in which a sealing relationship is maintained between the housing and a rotating seed disk and in which a portion of the seed disk is isolated from the vacuum source.

The invention is characterised in that the seal has a first portion of its length lying along the major portion of a circle and a re-entrant second portion extending between the ends of the first portion and lying inside the circle.

The invention further provides a seed meter as defined in claim 1 below.

In a preferred embodiment of a seal in accordance with the invention for use in conjunction with a vacuum seed meter, a seal in the form of an endless loop of resilient material is disposed between the inner housing wall of the seed meter and a side surface of the seed disk. The seal has a base portion extending along the length thereof which is releaseably held within a seal holder mounted on the inner wall of the housing. The seal also has a thin lip portion extending along the length thereof and emanating from a top edge of the base portion along the length of the seal. The lip portion extends from the base portion into contact with the side surface of the seed disk.

The base portion of the seal is preferably slightly tapered in cross-section so that the width thereof between opposite side surfaces adjacent the top of the base portion is slightly less than the width between the opposite side surfaces adjacent the bottom of the base portion. Each of the side surfaces has a rib extending therealong for receipt within a mating groove in one of the opposite side surfaces of a channel formed within the seal holder and extending along the length thereof. The seal holder is preferably made of resilient material so that the opposite side surfaces of the channel may be flexed apart to facilitate installation of the seal therein or removal of the seal therefrom and to form a vacuum sealing relationship with the base portion of the resilient seal.

The thin lip portion of the seal extends in a direction away from the axis of rotation of the seed disk as it extends from the base portion of the seal to the disk. Consequently the vacuum exerts an inward force on the lip portion of the seal so as to maintain the lip portion in contact with the seed disk as the seed disk rotates. The lip portion has a portion thereof of reduced thickness adjacent the base portion forming a hinge to facilitate flexing of the lip portion relative to the base portion.

A first portion of the length of the seal lies along the major portion of a circle having its center at the axis of rotation of the seed disk with the first portion being on the opposite side of a circumferential array of apertures through the seed disk from the axis of rotation. Consequently vacuum within the vacuum chamber freely communicates with the apertures in the region along the length of the first portion. A second portion of the length of the seal which extends between the opposite ends of the first portion extends inwardly toward the axis of rotation from the circle along which the first portion lies so as to isolate a portion of the side surface of the seed disk from the vacuum chamber and the vacuum therein. The second portion is comprised of two different relatively straight portions which extend across the circumferential array of apertures and an intermediate portion which curves in the same direction as the first portion of the seal.

Brief Description of the Drawings

The foregoing and other objects, features and advantages of the invention will be apparent from the following more particular description of a preferred embodiment of the invention, as illustrated in the accompanying drawings, in which:

Fig. 1 is a perspective view of a vacuum seed meter in an open position and showing a seed disk in conjunction with a flexible vacuum seal in accordance with the invention;

Fig. 2 is a front view of the vacuum seed meter of Fig. 1 and showing the reverse side of the seed disk;

Fig. 3 is a sectional view of the vacuum seed meter of Fig. 1 showing the meter in the closed position with the seed disk rotatably mounted therein and the flexible vacuum seal in accordance with the invention disposed against the seed disk;

Fig. 4 is a plan view of the flexible vacuum seal;

Fig. 5 is a side view of the flexible vacuum seal; and

Fig. 6 is a sectional view of the flexible vacuum seal in conjunction with the holder therefor.

Detailed Description

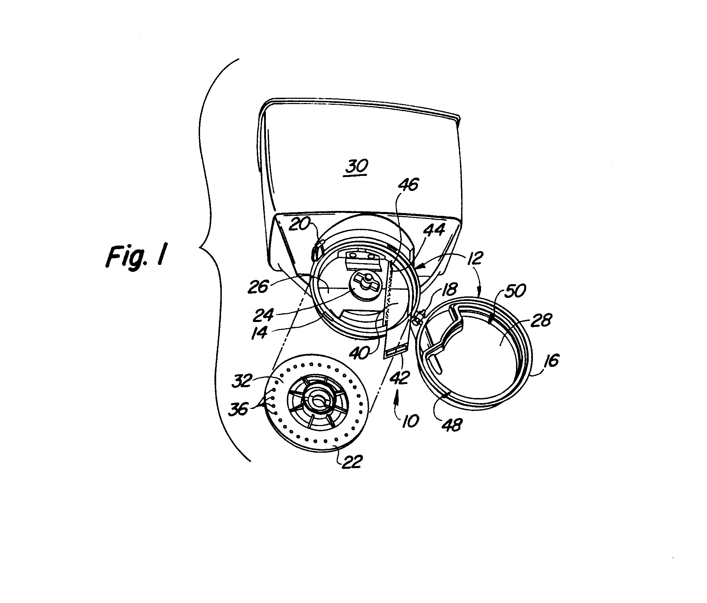

Figs. 1-3 depict a vacuum seed meter 10 utilizing a flexible vacuum seal in accordance with the invention. The vacuum seed meter 10 has a generally cylindrical housing 12 comprised of a first half shell 14 and an opposite, mating second half shell 16. The second half shell 16 is coupled to the first half shell 14 by a hinge 18, enabling the second half shell 16 to be closed over the first half shell 14 and locked in such position with a clasp 20 to close the generally cylindrical housing 12.

The vacuum seed meter 10 includes a seed disk 22 which is rotatably mounted on a hub 24 positioned at the center of the first half shell 14. With the seed disk 22 mounted on the hub 24 and the generally cylindrical housing 12 in the closed position, the seed disk 22 divides the interior of the housing 12 into a seed chamber 26 between the disk 22 and the first half shell 14 and a vacuum chamber 28 between the seed disk 22 and the second half shell 16. The generally cylindrical housing 12 is mounted at the bottom of the seed hopper 30 designed to contain a quantity of seed to be metered by the vacuum seed meter 10. Seeds within the seed hopper 30 flow into the seed chamber 26 within the first half shell 14 of the housing 12 where they form a seed mass against the side of the seed disk 22.

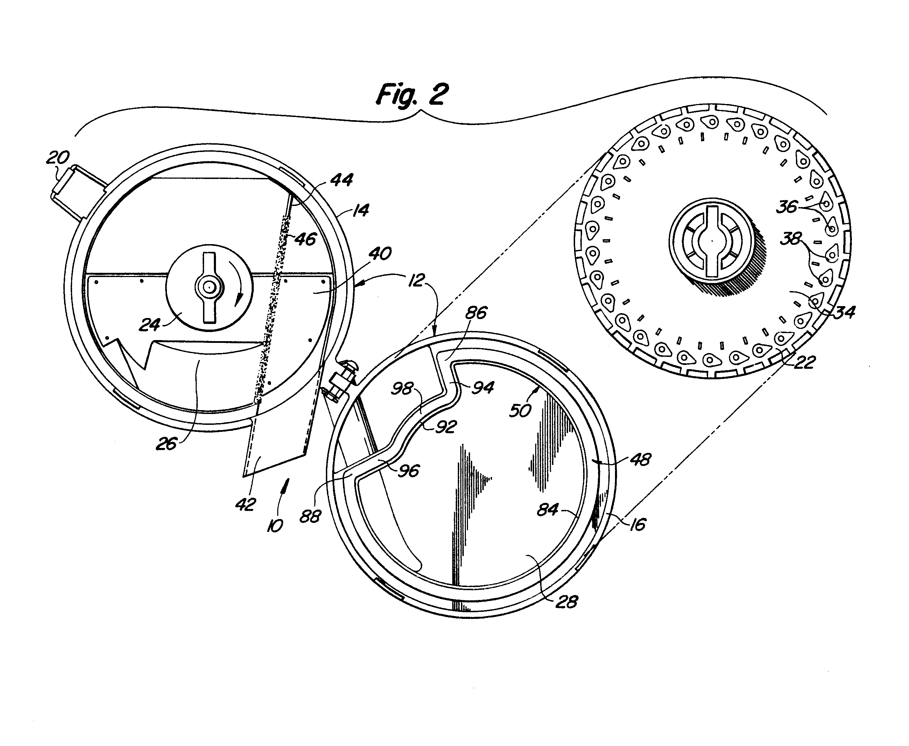

Fig. 1 depicts a first side surface 32 of the seed disk 22 which faces the second half shell 16 and forms a part of the vacuum chamber 28 when the housing 12 is closed. An opposite second side surface 34 of the seed disk 22 is shown in Fig. 2. The second side surface 34 faces the first half shell 14 and forms a part of the seed chamber 26 therein. As seen in Fig. 1 the seed disk 22 has a circumferential array of apertures therein in the form of a row of apertures 36 circumferentially disposed about the disk 22 adjacent the outer periphery thereof. As seen in Fig. 2 each of the apertures 36 extends through the thickness of the seed disk 22 so as to communicate between the first side surface 32 and the bottom of each of a plurality of seed cells 38 in the second side surface 34 of the seed disk 22.

It was previously noted that seeds from the seed hopper 30 flow into the seed chamber 26 within the first half shell 14 and form a seed mass at the second side surface 34 of the seed disk 22. The hub 24 is driven so as to rotate the seed disk 22. As the seed cells 38 on the second side surface 34 of the seed disk 22 move through the seed mass with rotation of the seed disk 22, the seed cells 38 agitate, accelerate and then capture therein individual seeds from the seed mass. As each such seed cell 38 begins to rise out of the seed mass, the individual seed contained therein is held in place by vacuum from a source which is coupled to the vacuum chamber 28 within the second half shell 16 and which communicates with the seed chamber 26 and the seed mass therein via the apertures 36. The vacuum holds the individual seeds within the seed cells 38 until the seed cells 38 reach a seed discharge area 40 at one side of the seed chamber 26. As the individual seed cells 38 enter the seed discharge area 40, the effects of the vacuum within the vacuum chamber 28 are cut off therefrom as explained hereafter, allowing the individual seed held within each seed cell 38 to fall out of the seed cell 38 under the influence of gravity. The seed then falls through a seed discharge chute 42 to the ground below. The seed discharge area 40 is separated from the seed chamber 26 by a divider 44 which has a brush 46 mounted thereon and bearing against the second side surface 34 of the seed disk 22.

The construction and operation of the vacuum seed meter 10 are shown and described in greater detail in the previously referred to co-pending application of Lundie et al.

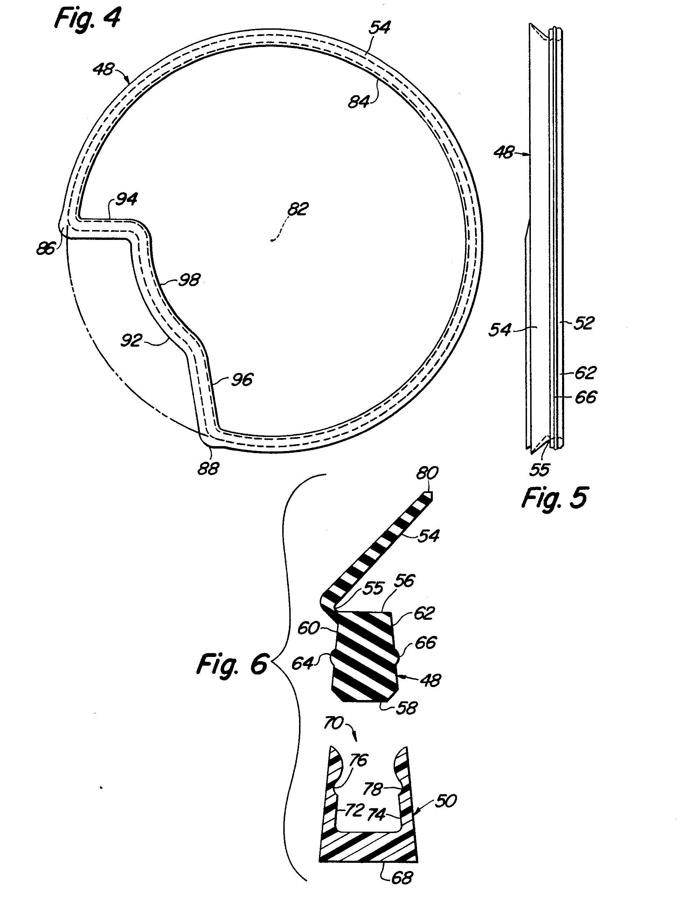

Referring to Figs. 1-3 a flexible vacuum seal 48 in accordance with the invention is mounted within the second half shell 16. The seal 48 which is in the form of an endless loop is releaseably held within a holder 50 mounted on the inner wall of the second half shell 16. The seal 48 by itself is shown in Figs. 4 and 5 and in sectional view together with the holder 50 in Fig. 6. The seal 48 is comprised of a base 52 extending along the length of the seal 48 and a thin lip 54 which extends along the length of the seal 48 and which is attached to the base 52 at a portion of the lip 54 of reduced thickness forming a resilient hinge 55. The base 52 has a top surface 56, an opposite bottom surface 58, an inner side surface 60 and an opposite outer side surface 62. The inner side surface 60 includes a rib 64 extending along the length of the inner side surface 60. In like fashion the outer side surface 62 has a rib 66 therein extending along the length thereof.

As seen in Fig. 6 the seal 48 is adapted to be releaseably held within the holder 50. The holder 50 which has a bottom surface 68 thereof mounted on the inner wall or surface of the second half shell 16 has a channel 70 therein along the length thereof. The channel 70 has opposite side walls 72 and 74 adapted to receive the inner and outer side surfaces 60 and 62 respectively of the base 52. The side wall 72 has a groove 76 therein along the length thereof for receiving the rib 64. In like fashion the side wall 74 has a groove 78 therein for receiving the rib 66 on the outer side surface 62 of the base 52.

The holder 50 is preferably comprised of resilient material such as plastic so that the opposite side walls 72 and 74 thereof can be flexed apart to facilitate installation of the seal 48 therein and removal of the seal 48 therefrom. The base 52· has a width thereof between the opposite side surfaces 60 and 62 at the top thereof adjacent the top surface 56 which is slightly less than the width between the side surfaces 60 and 62 adjacent the bottom surface 58. This requires that the side walls 72 and 74 of the holder 50 be spread apart slightly as the base 52 is inserted into the channel 70. Further downward movement of the base 52 into the channel 70 eventually results in seating of the base 52 therein with the ribs 64 and 66 snapping into place within the grooves 76 and 78 respectively.

Removal of the seal 48 from the holder 50 is accomplished by exerting an upward force on the seal 48 or by spreading the side walls 72 and 74 of the holder 50 apart, or both. This unseats the ribs 64 and 66 from the grooves 76 and 78 and allows the base 52 to slide upwardly and out of the channel 70.

The resilient material of the holder 50 also combines with the resilient material of the base 52 to form a vacuum-tight seal therebetween. With the bottom surface 58 of the holder 50 secured to the inner wall at the second half shell 16 such as by an adhesive, a vacuum-tight seal is formed between the inner wall of the half shell 16 and the lip 54.

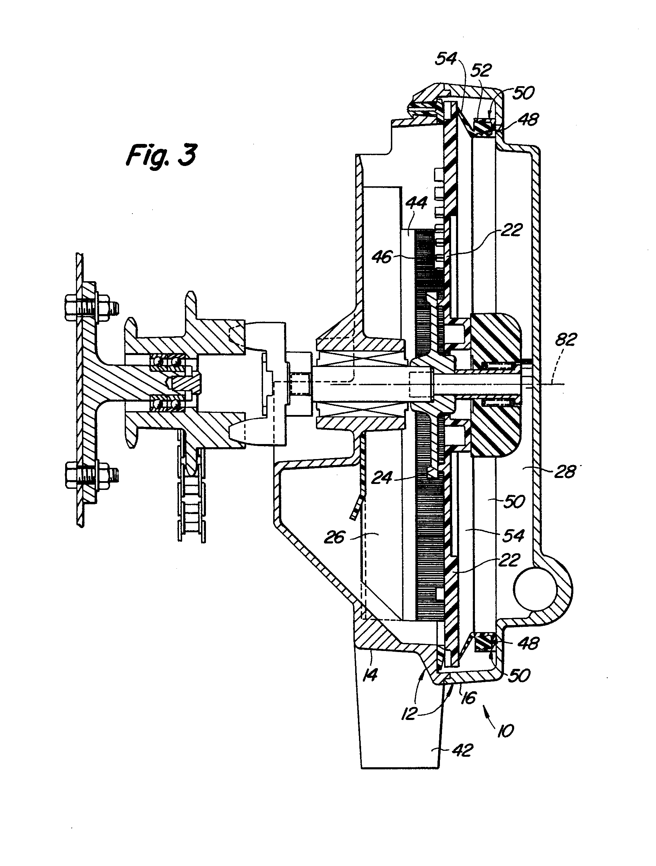

As perhaps best seen in Fig. 6 the thin lip 54 of the seal 48 emanates from the base 52 at an upper edge of the base 52 where the inner side wall 60 and the top surface 56 join together. The lip 54 which is flexibly coupled to the base 52 via the hinge 55 extends upwardly and outwardly from the base 52 and terminates in an edge 80 thereof which contacts the first side surface 32 of the seed disk 22. As seen in Figs. 3 and 5 the lip 54 extends in a direction outwardly and away from an axis 82 about which the seed disk 22 rotates and about which the seal 48 is centered as the lip 54 extends from the base 52 to the first side surface 32 of the seed disk 22. This disposes the lip 54 at an angle of approximately 45° with the first side surface 32 of the seed disk 22. With a vacuum source coupled to the vacuum chamber 28 within the interior of the second half shell 16, the resulting low pressure within the confines of the seal 48 tends to draw the lip 54 inwardly. This results in the lip 54 being held against the first side surface 32 of the seed disk 22 by the reduced pressure. This feature tends to provide a relatively tight sealing relationship between the seal 48 and the seed disk 22 in the face of rotation of the seed disk 22. At the same time the flexible nature of the lip 54 of the seal 48 further enhances the sealing relationship as well as the ability of the seed disk 22 to rotate relatively freely. The lip 54 flexes a relatively small amount along the length thereof with most of the flexing occurring at the hinge 55. This allows the edge 80 to maintain a sealing fit against the seed disk 22 while at and the same time minimizing the surface area of the lip 54 and therefore the drag on the seed disk 22. Such flexibility and close sealing relationship tend to allow for manufacturing and assembly tolerances of the vacuum seed meter 10 and its seed disk 22.

As seen in Fig. 4 the seal 48 has a first portion 84 extending along the length of the seal 48 between a first end 86 thereof and an opposite second end 88 thereof. The first portion 84 extends around the major portion of a circle 90 illustrated in dotted outline in Fig. 4 and having its center on the axis 82. The first portion 84 of the seal 48 resides against the first side surface 32 of the seed disk 22 at a location on the opposite side of the circumferential array of apertures 36 from the axis 82. This allows the vacuum within the vacuum chamber 28 to communicate with those apertures 36 residing within the confines of the seal 48. Communication of the vacuum with the apertures 36 provides for the holding of the individual seeds within the seed cells 38 as the seed cells 38 rise out of the seed mass within the seed chamber 26 as previously described.

The seal 48 has a second portion 92 extending along the length thereof between the first and second ends 86 and 88 which extends inwardly from the circle 90 in a direction toward the axis 82. The second portion 92 is comprised of a relatively straight portion 94 which extends inwardly from the first end 86 across the circumferential array of apertures 36 and a second relatively straight portion 96 which extends across the circumferential array of apertures 36 from the second end 88. An intermediate portion 98 of the second portion 92 of the seal 48 extends between the straight portions 94 and 96 and is curved in the same general direction as the first portion 84 of the seal 48.

Therefore it will be seen that the shape of the second portion 92 of the seal 48 causes each of the apertures 36 to momentarily exit the vacuum chamber 28 as the seed disk 22 rotates. This momentary exiting of each aperture 36 occurs as the associated seed cell 38 on the second side surface 34 of the seed disk 22 enters the seed discharge area 40. Thus the vacuum is cut off from the aperture 36 and the associated seed cell 38 from the time the aperture 36 crosses the straight portion 94 until the aperture 36 crosses the straight portion 96. This allows an individual seed contained within the seed cell 36 to be released from the seed cell 38 within the seed discharge area 40 and to fall through the seed discharge chute 42. The straight portion 96 is disposed on the opposite side of the seed disk 22 from and generally coincident with a portion of the brush 46 at the boundary of the seed discharge area 40. This insures against the apertures 36 being open or free of seeds outside of the seed discharge area 40 which would cause unwanted vacuum loss. The straight portion 94 is preferably in a horizontal position when the seed meter 10 is in the operative position. This allows seeds released within the seed discharge area 40 to fall straight down. The curved intermediate portion 98 rides against a relatively smooth portion of the side 32 of the seed disk 22 inside of the circumferential array of the apertures 36.

As shown in Figs. 4 and 5 the width of the lip 54 along the first portion 84 of the seal 48 is slightly less than along the second portion 92. This reduces the drag exerted on the seed disk 22 by the first portion 84 of the seal 48 without any significant reduction in the seal provided thereby.

It was previously noted that the lip 54 of the seal 48 extends in a direction outwardly and away from the axis 82 as it extends from the base 52 into contact with the first side surface 32 of the seed disk 22. Figs. 4 and 5 make clear the manner in which this occurs. The vacuum is confined within the endless seal 48 and therefore tends to draw all portions of the lip 54 in an inward direction toward the axis 82. This results in the lip 54 being held tightly against the first side surface 32 of the seed disk 22 along the entire length of the seal 48. The portion of the lip 54 which extends along the first portion 84 of the seal 48 forms the major portion of a section of a cone having a central axis coinciding with the axis 82.

While the invention has been particularly shown and described with reference to a preferred embodiment thereof, it will be understood by those skilled in the art that various changes in form and details may be made therein without departing from the spirit and scope of the invention.

0141638

CLAIMS

1.  A flexible seal of resilient material, the seal being of generally uniform cross-section and having an endless base portion (52) and an endless lip portion (54) extending from the base portion, characterised in that the seal has a first portion (84) of its length lying along the major portion of a circle and a re-entrant second portion (92) extending between the ends of the first portion and lying inside the circle.

2.  A flexible seal according to claim 1, characterised in that the second portion (92) of the length of the seal comprises first and second relatively straight portions (94, 96) extending inwardly from the circle at the ends of the first portion (84) and a curved portion (98) extending between the first and second relatively straight portions and convex relative to the centre of the said circle.

3.  A flexible seal according to claim 1 or 2, characterised in that the lip portion (54) is inclined outwardly away from the centre of the circle and has a thinned portion (55) adjacent the base portion (52) to define a resilient hinge.

4.  A flexible seal according to claim 1, 2 or 3, characterised in that the lip portion (54) springs from the inner edge of the base portion (52).

5.  A flexible seal according to any of claims 1 to 4, the base portion (52) has top and bottom surfaces (56, 58) and peripherally inner and outer side surfaces (60, 62) which converge slightly from the bottom surface to the top surface from which the lip portion (54) springs.

6.  A flexible seal according to claim 5, characterised in that each side surface (60, 62) has a ridge (64, 66) extending along the length of the seal intermediate the top and bottom surfaces.

7.  A flexible seal according to claim 6, characterised in that the base portion is held in a slot in a mounting member (50) extending along the length of the seal, the slot having opposite side walls (72, 74) in contact with the side surfaces (60, 62) of the base portion (52) of the seal, the side walls having grooves (76, 78) receiving the said ridges (64, 66).

8.  A flexible seal according to claim 7, characterised in that the mounting member (50) is made of resilient material to permit its side walls (72, 74) to be temporarily flexed outwardly to permit installation and removal of the seal.

9.  A seed meter comprising a housing (12) divided into a seed chamber (26) and a vacuum chamber (28) by a rotatable seed disk (22) with a circumferential row of through apertures (36) for picking up seeds under the influence of reduced pressure in the vacuum chamber, a sector of the disk being partitioned off both from the vacuum chamber and from the seed chamber so as to allow seeds to drop off the disk to a discharge chute (42), characterised in that the vacuum chamber (28) is sealed by an endless flexible seal (48) mounted in the housing (12) and having a lip (54) bearing against the face of the seed disk (22), the seal being disposed radially outside the apertures (36) except in the said sector where a re-entrant portion (92) of the seal is set radially inside the apertures.

10.  A seed meter according to claim 9, characterised in that the lip (54) is inclined outwardly from the axis of the seed disk (22).

11.  A seed meter according to claim 9 or 10, characterised in that the seal (48) extends for most of its length along an arc of a circle centred on the axis of the seed disk (22).

12.  A seed meter according to claim 11, characterised in that the remainder of the length of the seal (48) comprises an arcuate portion (98) radially inset the apertures (38) and connected portions (94, 96) extending across the path of the apertures.

0141638

13. A seed meter according to claim 9, 10, 11 or 12, characterised in that the seal (48) comprises an endless base portion (52) from which the lip (54) springs, the lip being thinned (55) at its root to form a hinge.

14. A seed meter according to claim 13, characterised in that the base portion (52) is releasably engaged in a slot in an endless seal holder (50) mounted on an inner wall of the housing (12).

0141638

1/4

*Fig. 1*

Fig. 2

Fig. 3

*Fig. 4*

54

48

84

94

86

98

82

92

96

88

*Fig. 5*

48

54

52

62

66

55

*Fig. 6*

80

54

55    56

60    62

64    66

72  74    48

58

70

76

78

72 74    50

68